Europäisches Patentamt

European Patent Office

Office européen des brevets

(19)

(11) Veröffentlichungsnummer: **0 224 053**
**A2**

## (12) EUROPÄISCHE PATENTANMELDUNG

(21) Anmeldenummer: 86114906.0

(22) Anmeldetag: 27.10.86

(51) Int. Cl.⁴: **H02K 5/22** , H02K 23/66 , H02K 11/00

(30) Priorität: 31.10.85 DE 3538940

(43) Veröffentlichungstag der Anmeldung:
03.06.87 Patentblatt 87/23

(84) Benannte Vertragsstaaten:
CH DE FR GB IT LI

(71) Anmelder: **Black & Decker Inc.**
**Drummond Plaza Office Park 1423 Kirkwood**
**Highway**
**Newark Delaware 19711(US)**

(72) Erfinder: **Köster, Walter**
**Bergedorfer Strasse 9**
**D-2875 Ganderkesee 1(DE)**

(74) Vertreter: **UEXKÜLL & STOLBERG**
**Patentanwälte**
**Beselerstrasse 4**
**D-2000 Hamburg 52(DE)**

(54) **Verdrahtungsanordnung für den Motor eines Elektrowerkzeugs.**

(57) Eine Verdrahtungsanordnung für den Motor eines Elektrowerkzeugs weist eine Lagerbrücke aus Kunststoff zur Aufnahme des Stators und des Rotors des Elektromotors sowie Feldstecker und ein Kontaktgitter zum Anschließen eines Netzanschlußkabels an die Feldwicklungen des Stators auf. Das Kontaktgitter ist als Stanzgitter (60) zum wahlweisen Anschließen von Drosseln, Umschaltern, Dioden, Widerständen o.ä. ausgeführt und hat Kontaktstellen (67, 68) für einen Ein/Aus-Schalter und/oder einen Drehrichtungs-Umschalter. Ferner ist das ebene Stanzgitter (60) auf einer Seite einer Kohlehalterplatte angeordnet.

EP 0 224 053 A2

## Verdrahtungsanordnung für den Motor eines Elektrowerkzeugs

Die Erfindung betrifft eine Verdrahtungsanordnung für den Elektromotor eines Handwerkzeugs, mit einer Lagerbrücke aus Kunststoff zur Aufnahme des Stators und des Rotors des Elektromotors sowie mit Feldsteckern und einem Kontaktgitter zum Anschließen eines Netzanschlußkabels an die Feldwicklungen des Stators.

Aus der DE-PS 31 38 047 ist es bereits bekannt, eine Schaltplatine mit gedruckter Schaltung vorzusehen, an der die Enden der Feldwicklung, die Kohlenbürsten, der Schalter und das Netzanschlußkabel angeschlossen sind.

Aufgabe der Erfindung ist es, die bekannte Verdrahtungsanordnung dahingehend zu verbessern, daß die Feldwicklungen des Stators auf einfachere Weise unter Zwischenschaltung verschiedenster Bauelemente wie Entstördrosseln, Dioden, o.ä. mit dem Netzanschlußkabel verbunden werden können. Dabei sollen auf einfache Weise verschiedene Bestückungsvarianten durchführbar sein.

Zur Lösung dieser Aufgabe dient eine Anordnung der eingangs genannten Art, welche sich dadurch auszeichnet, daß das Kontaktgitter als Stanzgitter zum wahlweisen Anschließen von Drosseln, Umschaltern, Dioden, Widerständen o.ä. ausgeführt ist, daß das Stanzgitter Kontaktstellen für einen Ein/Aus-Schalter und/oder einen Drehrichtungs-Umschalter aufweist, und daß das Stanzgitter auf einer Seite einer Kohlehalterplatte angeordnet ist.

Ein derartiges Stanzgitter bietet den Vorteil der leichten Montierbarkeit an einer Kohlehalterplatte bzw. in Vertiefungen der üblicherweise im Spritzgußverfahren aus Kunststoff hergestellten Kohlehalterplatte. Das Stanzgitter läßt sich aus Flachmaterial ohne Schwierigkeiten ausstanzen, wobei Anschlußzungen sowie Anschlußfahnen senkrecht zur Stanzgitterebene hochgebogen werden. Das derart vorgefertigte Stanzgitter wird mit der Kohlehalterplatte verschweißt, verklebt oder auf sonstige Weise verbunden, vorzugsweise durch Ultraschall verschweißt. Anschließend können Verbindungsstege durch Stanzen abgetrennt werden, so daß das Stanzgitter aus zwei Hälften besteht. Je nach Art der gewünschten Stanzgitter-Bestückung werden dann zusätzlich Brücken und Stege ausgestanzt und nach dem Einsetzen und Verlöten der zugehörigen Bauelemente ist die gewünschte Art der Verdrahtung des Elektromotors fertiggestellt.

Vorteilhafte Ausgestaltungen der Erfindung ergeben sich aus den Unteransprüchen.

Weitere vorteilhafte Ausgestaltungen der Erfindung ergeben sich aus der nachfolgenden Figurenbeschreibung.

Die Erfindung wird im folgenden anhand eines Ausführungsbeispiels näher erläutert; es zeigen:

Fig. 1 eine perspektivische Explosionsdarstellung der wesentlichen Teile eines Elektromotors;

Fig. 2 eine Explosionsdarstellung der Lagerbrücke des Elektormotors von Fig. 1;

Fig. 3 eine perspektivische Darstellung eines Stanzgitters für eine Lagerbrücke nach Fig. 2;

Fig. 4 ein erstes Schaltbild für ein Stanzgitter; und

Fig. 5 ein zweites Schaltbild für das Stanzgitter.

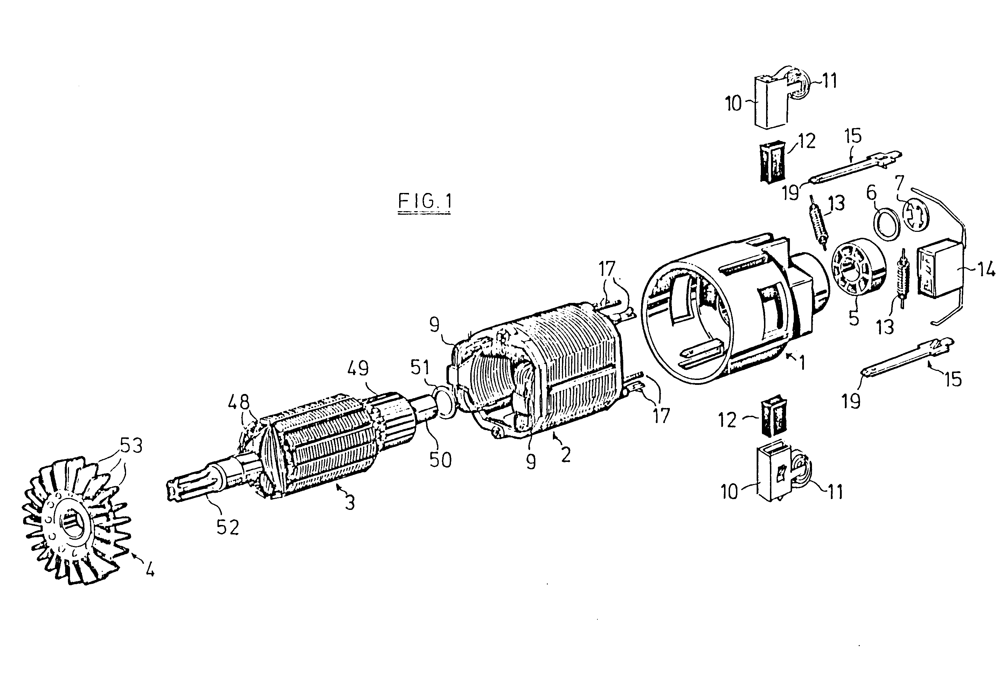

Fig. 1 zeigt die wesentlichen Teile eines Elektromotors in perspektivischer, auseinandergezogener Darstellung, die auch als sogenannte Explosionsdarstellung bezeichnet wird. Das Blechpaket eines Stators 2 mit auf bekannte Weise gewickelten Feldwicklungen 9 wird von einer Lagerbrücke 1 aus Kunststoff gehalten. Die Lagerbrücke 1 ist becherförmig mit einem Boden an einem Ende, in den ein Lager 5 eingesetzt wird. Das Lager 5 dient zur Lagerung eines Endes der Welle eines Rotors 3, der in an sich bekannter Weise Rotorwicklungen 48 und einen Kommutator 49 zum Anschließen der Wicklungsenden aufweist. Der Kommutator 49 ist an der Seite des Lagerzapfens 50 der Rotorwelle angeordnet. Der Lagerzapfen 50 wird von dem Lager 5 gelagert. Zwischen den Kommutator 49 und den Boden der Lagerbrücke 1 wird üblicherweise eine Unterlegscheibe 51 eingelegt, da der Rotor 3 aus Metall, die Lagerbrücke 1 hingegen aus Kunststoff besteht. Das dem Lagerzapfen 50 abgewandte Ende der Rotorwelle ist als Keilwelle 52 ausgebildet, auf die ein Lüfterrad 4 aufgesteckt wird. Das Lüfterrad 4 weist Flügel oder Rippen 53 auf, mit welchen dem Stator 2 und dem Rotor 3, insbesondere deren Feldwicklungen 9 und 48 Kühlluft zugeführt wird.

Durch den Boden der Lagerbrücke 1 werden von der Seite des Lagers 5 her Feldstecker 15 durchgesteckt, die mit ihren Kontaktzungen 19 in Feldwicklungsklemmen 17 eingreifen und einen Anschluß vom Netz zur Feldwicklung 9 herstellen sollen. Zu diesem Zweck sind die Enden der Feldwicklungen 9 an federnde Feldwicklungsklemmen 17 angeschlossen, beispielsweise mit diesen verlötet, um die Feldwicklungsklemmen 17 herumgewickelt oder an diesen eingeklemmt. Das jeweils zweckmäßigste Montageverfahren ist für den Fachmann ohne Schwierigkeiten auswählbar.

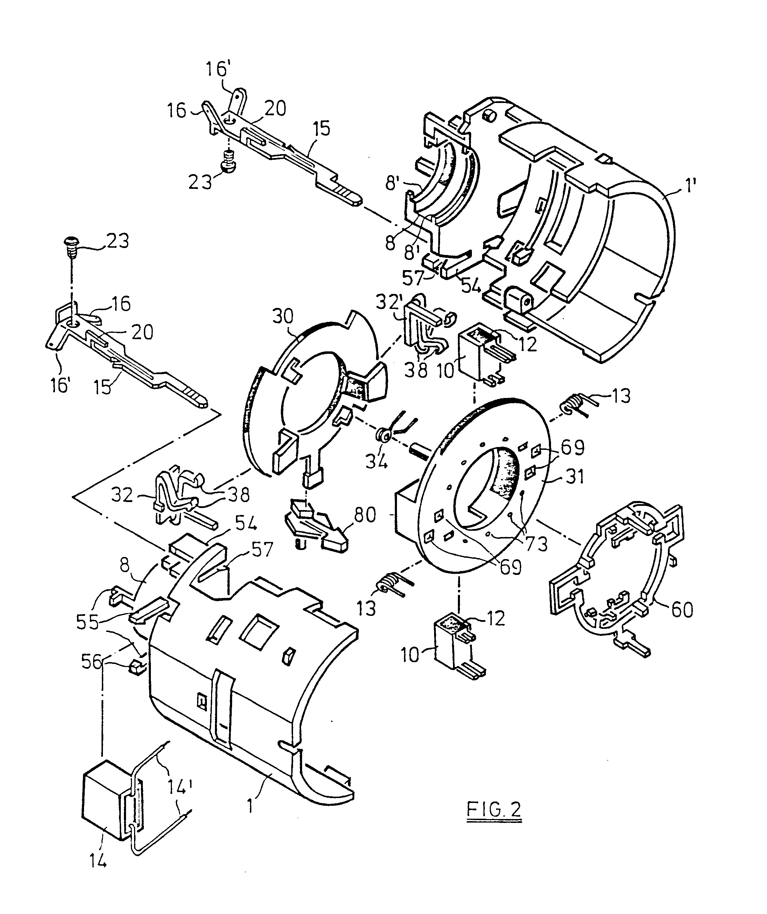

Die in Fig. 1 schematisch dargestellten Feldstecker 15 sind an ihren anderen, den Kontaktzungen 19 abgewandten Enden mit Anschlußmitteln zum Anschließen von Netzanschlußkabeln versehen. Diese Anschlußmittel sind in Fig. 2 besser erkennbar. Mit den Feldsteckern 15 ist üblicherweise ein Kondensator 14 verbunden, der zur Rauschunterdrückung sowie zur Funkentstörung dient. Außerdem sind Entstördrosseln 13 vorgesehen, die in die Zuleitung vom Netz zur Feldwicklung 9 geschaltet werden.

Kohlehalter 10 dienen zur Aufnahme von Kohlebürsten 12, die von Federn 11 radial nach innen in Kontakt mit dem Kommutator 49 des Rotors 3 gedrückt werden. Zur Sicherung der Rotorwelle dienen schließlich noch eine Unterlegscheibe 6 und ein Klemmring 7, die auf das freie Ende des durch das Lager 5 ragenden Lagerzapfens 50 gesteckt werden und ein axiales Verschieben oder Lösen des Lagerzapfens 50 aus dem Lager 5 verhindern.

Fig. 2 zeigt im wesentlichen Einzelheiten der Lagerbrücke 1 mit zugehörigen Teilen in Explosionsdarstellung. Man erkennt, daß die aus Kunststoff vorzugsweise im Spritzgußverfahren hergestellte Lagerbrücke 1 aus zwei Halbschalen 1 und 1' besteht, die durch Zusammendrücken miteinander verriegelt werden können. Am Boden der Lagerbrücken-Halbschalen 1, 1' ist eine Lagerschale 8 für die Aufnahme des in Fig. 1 dargestellten Rotorwellen-Lagers 5 vorgesehen. Die Lagerschale 8 weist zu diesem Zweck in der Zeichnung erkennbare Radialflansche 8' auf, welche ein axiales Verschieben des Lagers 5 verhindern. Über bzw. auf die Lagerschale 8 wird der Kondensator 14 gelegt, dessen Kondensatoranschlüsse 14' die Lagerschale 8 umgreifen. Zum Halten des Kondensators 14 dienen an die Lagerschale 8 angeformte Stege 55, die an ihren freien Enden Widerhaken 56 zum Festhalten des Kondensators 14 aufweisen. Die Kondensatoranschlüsse 14' werden durch Kanäle gesteckt, die in Feldstecker-Halterungen 54 vorgesehen sind. Die Feldstecker-Halterungen 54 sind ebenfalls an die Lagerbrücken-Halbschalen 1, 1' axial angeformt und erstrecken sich damit parallel und im Abstand zum Mantel der Lagerschale 8. Im Boden der Lagerbrücken-Halbschalen 1, 1' sind im Bereich der Feldstecker-Halterungen 54 Schlitze 57 vorgesehen, durch welche die Feldstecker 15 von der Seite der Lagerschale 8 in das Innere der den Stator 2 aufnehmenden Lagerbrücke 1 gesteckt werden. Man erkennt in Fig. 2, daß die Feldstecker 15 mit Klemmschrauben 23 zum Befestigen von Anschlußkabeln versehen sind, die keine Kabelschuhe aufweisen. Für die Befestigung von Anschlußkabeln mit Kabelschuhen sind Steckfahnen 16 und 16' vorgesehen.

Fig. 2 zeigt außerdem einen Schaltring 30, eine Kohlehalterplatte 31 und ein Stanzgitter 60 die zusammen mit weiteren Bauteilen eine in die Lagerbrücke 1 einzusetzende Einheit bilden. Diese Einheit dient zur Halterung der Kohlebürsten 12 mit den Kohlehaltern 10, zur Aufnahme der Entstördrosseln 13 und zur Bildung eines kombinierten Ein/Aus-und Rechts/Links-Schalters. Hierzu dienen Kontaktfedern 32 und 32', welche je nach Schaltstellung des Schaltrings 30 eine Seite des Stanzgitters 60 berühren und damit die Drehrichtung des Motors festlegen. Zwei Rückstellfedern 34 dienen dazu, den Schaltring 30 in Neutralstellung eines Umschalters 80 in die Ausgangslage zurückzubewegen.

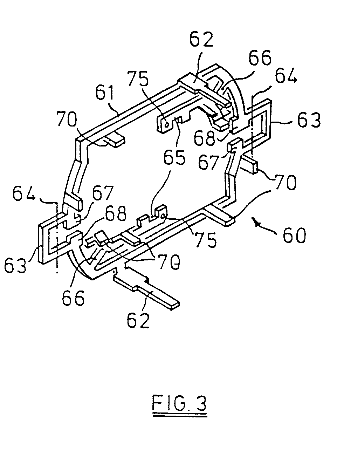

Fig. 3 zeigt das in Fig. 2 erkennbare und auf dem Boden der Kohlehalterplatte 31 befestigbare Stanzgitter 60 in Form eines ebenen Gitters aus dünnem, elektrisch leitendem Material mit einem äußeren Bandleiter 61 und einem inneren Bandleiter 65. Der innere und der äußere Bandleiter 65 und 61 sind durch Brücken 66 miteinander verbunden. Der äußere Bandleiter 61 hat etwa die Form eines an diametral gegenüberliegenden Stellen unterbrochenen Ringes. An den Enden der Unterbrechungsstellen sind Kontaktstellen 67 und 68 zur Kontaktierung durch die Beine 38 der in Fig. 2 erkennbaren Kontaktfedern 32, 32' vorgesehen. Vor der Verbindung des Stanzgitters 60 mit der Kohlehalterplatte 31, die vorzugsweise durch Verschweißen mittels Ultraschall erfolgt, sind die beiden Hälften des äußeren Bandleiters 61 in der Nähe der Kontaktstellen 67 und 68 durch Verbindungsstege 63 miteinander verbunden. Diese Verbindungsstege 63 werden nach dem Verschweißen des Stanzgitters 60 mit der Kohlehalterplatte 31 entlang von Trennlinien 64 abgetrennt. Dadurch entsteht ein flaches, ebenes Netzwerk aus zwei Hälften. Es wird darauf hingewiesen, daß zur leichteren Montage des Stanzgitters 60 in der dem Schaltring 30 abgewandten Bodenfläche der Kohlehalterplatte 31 in der Zeichnung nicht dargestellten Vertiefungen eingearbeitet sind, die dem Stanzgitter 60 entsprechen, so daß sich das Stanzgitter 60 ohne Schwierigkeiten an bzw. in der Kohlehalterplatte 31 fixieren läßt. Die Kontaktierung der Kontaktstellen 67 und 68 erfolgt durch die Beine 38 der Kontaktfedern 32, welche von dem Schaltring 30 abwechselnd durch eine der beiden Öffnungen 69 (Fig. 2) in der Kohlehalterplatte 31 bewegt werden.

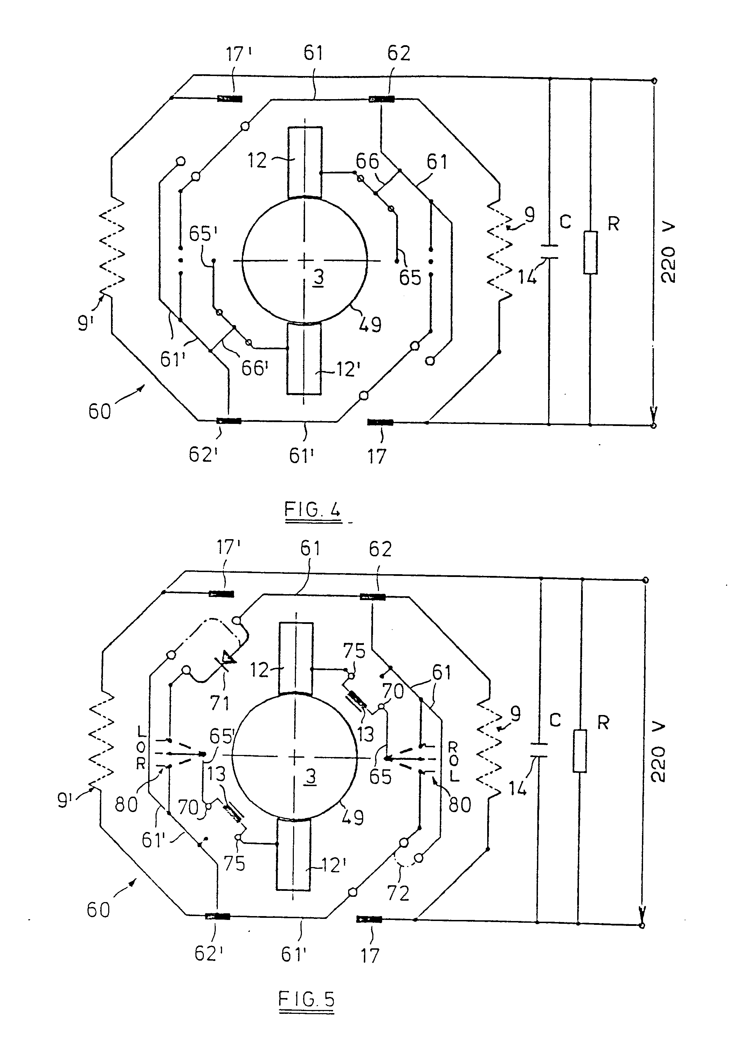

Am äußeren Bandleiter 61 sind ferner Anschlußzungen 62 vorgesehen, die ursprünglich in der Ebene des Stanzgitters 60 hergestellt und nach dem Ausstanzen senkrecht zur Stanzgitterebene gebogen sind. Die Anschlußzungen 62 dienen zum Kontaktieren jeweils einer Feldwicklungsklemme 17. Dadurch wird erreicht, daß der über den Feldstecker 15 zugeführte Netzstrom zunächst gemäß Fig. 4 oder 5 über eine Feldwicklung 9 fließt und von dieser durch die Anschlußzunge 62 an den äußeren Bandleiter 61 des Stanzgitters 60 geführt wird. Je nach Art der Beschaltung des Stanzgitters 60 fließt der Strom vom äußeren Bandleiter 61 entweder direkt zum inneren Bandleiter 65 und von diesem über die Kohlebürsten 12 durch den Rotor 3, oder gemäß Fig. 5 indirekt über einen Rechts/Links (R/L)-Umschalter 80 und gegebenenfalls über eine Entstördrossel 13.

Am Stanzgitter 60 sind Anschlußfahnen 70 vorgesehen, die an vorbestimmten Stellen senkrecht zur Ebene des Stanzgitters 60 hochgebogen sind. Ferner weisen der innere Bandleiter 65 und/oder der äußere Bandleiter 61 Bohrungen 75 auf, die jeweils zum Anschließen von Bauelementen wie Entstördrosseln 13 oder Dioden 71 (Fig. 5) dienen. Die Enden der Entstördrosseln 13 und/oder der Diode 71 werden entweder durch die Bohrungen 75 oder in unmittelbarer Nachbarschaft einer Anschlußfahne 70 durch in der Kohlehalterplatte 31 vorgesehene Löcher 73 gesteckt, so daß sie mit dem Stanzgitter 60 ohne weiteres verlötet werden können. Auf diese Weise wird ohne Schwierigkeiten eine Verbindung von Bauelementen wie Entstördrossel 13, Diode 71 oder Kontaktfeder 32, 32' zu dem Stanzgitter 60 hergestellt, und zwar in etwa wie beim Bestücken einer an sich bekannten, Leiterbahnen aufweisenden Platine.

Die Fig. 4 und 5 zeigen lediglich beipielhaft zwei Möglichkeiten der Beschaltung und Bestückung des Stanzgitters 60.

Bei der Ausführung nach Fig. 4 ist das Stanzgitter 61 durch Abtrennung der Verbindungsstege 63 (Fig. 3) in zwei Hälften geteilt. Der Strom fließt beispielsweise vom Netz über die erste Feldwicklungsklemme 17 durch die erste Feldwicklung 9 und die erste Anschlußzunge 62 in den oberen, äußeren Bandleiter 61. Vom oberen Bandleiter 61 fließt der Strom weiter über die obere Brücke 66 zur oberen Kohlebürste 12. Von der oberen Kohlebürste 12 fließt der Strom durch den Kommutator 49 (Fig. 1) des Rotors 3 zur unteren Kohlebürste 12'. Von der unteren Kohlebürste 12' verläuft der Stromfluß weiter über den unteren, inneren Bandleiter 65' und die untere Brücke 66' zum unteren, äußeren Bandleiter 61'. Von letzterem wird der Strom über die untere Anschlußzunge 62' abgenommen und über die andere Feldwicklung 9' zur anderen Feldwicklungsklemme 17' geleitet. An letztere ist das zweite Anschlußkabel über den in den Fig. 1 und 2 ebenfalls dargestellten anderen Feldstecker 15 angeschlossen.

Im übrigen sind in den Fig. 4 und 5 noch der Kondensator 14 und ein dazu parallel geschalteter Widerstand eingezeichnet. Letzterer dient dazu, einen Ladungsausgleich am Kondensator 14 vorzunehmen, wenn das Netzanschlußkabel von den Feldsteckern 15 getrennt wird, damit der Benutzer keinen elektrischen Schlag bekommen kann.

Fig. 5 zeigt das Stanzgitter 60 ebenfalls in - schematischer Darstellung, und zwar zusätzlich mit Entstördrosseln 13 und mit einer Diode 71 sowie mit einem R/L-Umschalter 80 bestückt. Die Drosseln 13 sind jeweils mit einem Ende durch die Bohrungen 75 des inneren Bandleiters 65 gesteckt und mit diesem verlötet, während ihr jeweils anderes Ende mit einer Anschlußfahne 70 des inneren Bandleiters 65 verbunden ist. Es ist klar, daß anstelle der Anschlußfahne 70 auch eine weitere Bohrung im inneren Bandleiter 65 vorgesehen sein kann. Die Verbindung zwischen Bohrung 75 und Anschlußfahne 70 ist dabei herausgestanzt, so daß die Brücke 66 zum äußeren Bandleiter 61 unterbrochen ist. Der Strom fließt nun von der Anschlußzunge 62 über den äußeren Bandleiter 61 zum R/L-Umschalter 80 und beispielsweise bei Rechtslauf vom Umschalter 80 über den inneren Bandleiter 65 und die Entstördrossel 13 zur Kohlebürste 12.

Bei Linkslauf erfolgt der Stromfluß über die untere Kohlebürste 12' und zusätzlich über eine Diode 71, die in den äußeren Bandleiter 61 eingeschaltet ist, wenn eine Drehzahlreduzierung erwünscht ist.

Es wird darauf hingewiesen, daß der R/L-Umschalter 80 auch eine neutrale Nullstellung hat, die mit "O" bezeichnet ist. Dadurch ist der R/L-Umschalter 80 gleichzeitig ein Ein/Aus-Schalter.

Ferner wird darauf hingewiesen, daß das erfindungsgemäße Stanzgitter 60 auch noch auf andere Weise bestückt werden kann, wobei die Art der Bestückung für den Fachmann keine Schwierigkeiten darstellt. Beispielsweise kann die Diode 71 in den äußeren Bandleiter 61 eingeschaltet sein, wie dies strichpunktiert angedeutet ist. In der anderen Hälfte des Stanzgitters 60 ist dann anstelle der Diode 71 eine Verbindungsbrücke 72 vorgesehen, wodurch der Umschalter 80 nicht die Drehrichtung umkehrt, sondern zwischen zwei verschiedenen Geschwindigkeiten umschaltet.

Schließlich wird darauf hingewiesen, daß die Breite der Bandleiter 61 und 65 etwa 1 bis 2mm und ihre Dicke etwa 0,1 bis 0,3mm beträgt. Die richtige Dimensionierung ist für den Fachmann jedoch ohne Schwierigkeiten wählbar.

**Ansprüche**

1. Verdrahtungsanordnung für den Motor eines Elektrowerkzeugs, mit einer Lagerbrücke (1) aus Kunststoff zur Aufnahme des Stators (2) und des Rotors (3) des Elektromotors sowie mit Feldsteckern (15) und einem Kontaktgitter zum Anschließen eines Netzanschlußkabels an die Feldwicklungen - (9) des Stators (2), **dadurch gekennzeichnet,** daß das Kontaktgitter als Stanzgitter (60) zum wahlweisen Anschließen von Drosseln (13), Umschaltern - (80), Dioden (71), Widerständen o.ä. ausgeführt ist, daß das Stanzgitter Kontaktstellen (67, 68) für einen Ein/Aus-Schalter und/oder einen Drehrichtungs-Umschalter aufweist, und daß das Stanzgitter (60) auf einer Seite einer Kohlehalterplatte (31) angeordnet ist.

2. Anordnung nach Anspruch 1, **dadurch gekennzeichnet**, daß das Stanzgitter (60) ein zusammenhängender Bandleiter (61, 65) aus Metall ist, der mit der rotorseitigen Fläche der Kohlehalterplatte (31) verschweißt, verklebt oder auf sonstige Weise verbunden wird.

3. Vorrichtung nach Anspruch 2, **dadurch gekennzeichnet**, daß das Stanzgitter (60) im wesentlichen in einer Ebene liegt, jedoch senkrecht dazu abgewinkelte Anschlußzungen (62) für die Feldwicklungen (9) sowie Bohrungen (75) für das Durchstecken von Bauelementen wie Drosseln (13), Dioden (71) etc. und Anschlußfahnen (70) zum Anschließen derartiger Bauelemente aufweist.

4. Anordnung nach einem der Ansprüche 1 bis 3, **dadurch gekennzeichnet**, daß das mit der Kohlehalterplatte (31) verbundene Stanzgitter (60) in zwei Hälften auftrennbar ist.

FIG.1

10 11
12 15
19 13
6 7
17 14
9 5 13
1
49 51 2
48 9
50
3
53
52
4
12
10 11
19 15

0 224 053

FIG. 2

FIG. 3

FIG. 4

FIG. 5